# EUROPÄISCHE PATENTSCHRIFT

(11) **EP 2 143 114 B1**
(45) Veröffentlichungstag und Bekanntmachung des Hinweises auf die Patenterteilung: **07.09.2011**
(21) Anmeldenummer: 08748700.5
(22) Anmeldetag: 31.03.2008
(51) Int. Cl.: H01F 7/08, F02D 41/20, H01F 7/128, H01F 7/16, H01F 27/40

(54) **ELEKTROMAGNETISCHES BETÄTIGUNGSELEMENT**
ELECTROMAGNETIC ACTUATING ELEMENT
ELEMENT D'ACTIONNEMENT ELECTROMAGNETIQUE

(30) Priorität: 24.04.2007 DE 102007019619
(43) Veröffentlichungstag der Anmeldung: 13.01.2010
(73) Patentinhaber: THOMAS MAGNETE GmbH, 57562 Herdorf (DE)
(72) Erfinder: SCHULZ, René, 57299 Burbach (DE); ROLLAND, Thomas, 57584 Wallmenroth (DE); KERBER, Josef, V., 63773 Goldbach (DE)
(74) Vertreter: Sparing, Rolf Klaus
(86) Internationale Anmeldenummer: PCT/DE2008/000524
(87) Internationale Veröffentlichungsnummer: WO 2008/128499

(56) Entgegenhaltungen:
- EP-A- 1 719 897
- US-A- 5 575 264

## Beschreibung

Die Erfindung betrifft ein elektromagnetisches Betätigungselement, und ein Verfahren zum Bereitstellen und Abrufen von Kenndaten für ein solches Betätigungselement.

Bei der Herstellung von elektromagnetischen Betätigungselementen in Form einer Pumpe, eines Ventils, eines Stellorgans oder dergleichen werden nach der Montage am Serienprüfstand Kenndaten der einzelnen Betätigungselemente gemessen, welche Kenndaten zusammen mit dem Gerät bzw. dem Betätigungselement an eine elektronische Steuerungsschaltung eines Kunden übermittelt werden sollen. Die Steuerungsschaltung steuert ein jeweiliges Betätigungselement auf Grundlage der zugehörigen spezifischen Kenndaten an, um somit durch eine Kompensation von Fertigungstoleranzen und dergleichen einen genaueren Betrieb des Betätigungselements zu erzielen. Bei einem herkömmlichen Verfahren zum Auslesen und Übertragen solcher Kenndaten werden diese zunächst gemessen, wobei das Produkt in Form eines entsprechenden Betätigungselements anschließend mit verschlüsselten Kenndaten beschriftet wird. Die Kenndaten werden sodann mit einem Scanner ausgelesen, bevor sie an die elektronische Steuerschaltung übertragen werden. Das Beschriften des Produktes mit den verschlüsselten Kenndaten, insbesondere das Auslesen dieser Daten mit einem Scanner ist zeit- und arbeitsaufwendig und damit teuer.

Bei einem weiteren herkömmlichen Verfahren zum Übertragen von Kenndaten werden diese zunächst gemessen und anschließend in einer Datei gespeichert. Das Produkt wird mit einer laufenden Produktnummer beschriftet, wobei parallel dazu die Datei, in der die Kenndaten gespeichert sind, an den Kunden übermittelt wird. Anhand einer jeweiligen Produktnummer kann der Kunde die Dateien mit den jeweiligen Kenndaten einem konkreten Produkt zuordnen und dann der elektronischen Steuerungsschaltung zuweisen. Die separate Übermittlung der Datei, in der die Kenndaten gespeichert sind, an den Kunden ist aufwendig und fehlerträchtig.

Nach einem weiteren herkömmlichen Verfahren sind die elektromagnetischen Betätigungselemente jeweils mit einer integrierten Ansteuerelektronik versehen, in der auch die zugehörigen Kenndaten des Elements gespeichert sind. Eine solche Ansteuerelektronik erfordert jedoch eine eigene Energieversorgung und erhöht die Herstellungskosten.

EP 1 719 897 A1, der als nächstliegender Stand der Technik angesehen wird, beschreibt ein elektromagnetisches Betätigungselement gemäß dem Oberbegriff des Anspruchs 1 für ein Einspritzen von Brennstoff in einen Verbrennungsmotor. Eine Ausführungsform des Betätigungselements umfasst einen Ventilkörper, welcher mittels eines Elektromagneten verlagerbar ist. Das Betätigungselement umfasst weiter einen Anschlußbereich mit einem elektrischen Kontakt zur Versorgung des Betätigungselements mit elektrischer Energie sowie eine Speichereinheit, welche an dem Betätigungselement befestigt ist und zur Speicherung von Kenndaten dient. Die Speichereinheit ist als EPROM ausgebildet und zur Datenübertragung mit dem elektrischen Kontakt des Anschlußbereichs verbunden. In der Speichereinheit werden Produktionsdaten wie Produktionsdatum und -zeit, Produktionsort, Auslieferungsdaten, etc. gespeichert. Ein Auslesen der Daten erfolgt außerhalb der bestimmungsgemäßen Verwendung des Betätigungselements zu Wartungszwecken.

DE 195 20 037 A1 beschreibt ein Verfahren und eine Struktur zum Steuern einer Brennstoffeinspritzvorrichtung, wobei eine Leistungsabweichung elektronisch minimiert oder gar eliminiert wird. Ein solches Verfahren umfasst die Schritte des Messens der sich ergebenden Charakteristika der Vorrichtung bei einer Vielzahl von Betriebsbedingungen, wie z.B. Zeitsteuer- und Liefercharakteristiken der Brennstoffeinspritzvorrichtung, Einstellen des Steuersignals als eine Funktion der gemessenen, sich ergebenden Charakteristika, wie beispielsweise durch Einstellen einer Basis-Zahlsteuerung und -dauer oder Impulsbreite eines Brennstofflieferbefehlssignals für eine Brennstoffeinspritzvorrichtung, und Steuern der Vorrichtung in Übereinstimmung mit dem eingestellten Steuersignal, um die Leistungsabweichung zu vermindern.

EP 0 868 602 B1 beschreibt eine EEPROM-Technologie als Datenträger für die Leistungsdaten einer Einspritzdüse. Hierin ist ein Verfahren zum Bereitstellen und Abrufen von technischen Daten für ein elektromagnetisch betätigtes Kraftstoffeinspritzventil erläutert, bei dem an dem Kraftstoffeinspritzventil eine Speichereinheit vorgesehen ist, in der Kenndaten in Form von technischen Datenspezifikationen über das Betriebsverhalten des Ventils gespeichert werden. Anschließend werden die Kenndaten auf einen Fahrzeugcomputer überspielt, der diese Kenndaten verwendet, um Unterschiede zwischen Kraftstoffeinspritzventilen vorteilhaft auszujustieren und Abweichungen der Ventile von einem einzigen zentrierten Einspritzstrahl zu beheben. Eine eindeutige Zuordnung der Speichereinheit zu einem jeweiligen Kraftstoffeinspritzventil ergibt sich daraus, dass die Speichereinheit in einem an dem Kraftstoffeinspritzventil angegossenen Gehäuse eingekapselt ist. Eine Datenübertragung zwischen der Speichereinheit und einem externen System wie beispielsweise dem Fahrzeugcomputer sowie eine Energieversorgung der Speichereinheit einerseits und eine elektrische Energieversorgung des Kraftstoffeinspriztventils andererseits erfolgt unabhängig und getrennt voneinander.

DE 10 2005 001 427 A1 zeigt ein Verfahren zum Korrigieren des Einspritzverhaltens wenigstens eines ein Magnetventil aufweisenden Injektors. Bei einem solchen Verfahren werden Informationen über den wenigstens einen Injektor, die durch Vergleichen von Soll-Werten mit Ist-Werten an individuell mehreren Prüfpunkten des mindestens einen Injektors ermittelt wurden, gespeichert, wobei der wenigstens eine Injektor unter Berücksichtigung der gespeicherten Informationen unter Verwendung des Hubs des Magnetventils als Information gesteuert wird.

DE 101 10 729 A1 beschreibt ein Automatikgetriebe für ein Kraftfahrzeug. Dem Getriebe ist eine Schaltvorgänge des Getriebes steuernde Steuereinheit zugeordnet, die von dem Getriebe getrennt angeordnet ist. Dem Getriebe ist eine Speichereinheit zugeordnet, in welcher Eigenschaften und Betriebsdaten des Getriebes gespeichert werden können, um diese zur Steuerung des Gestriebes zu verwenden. Die Speichereinheit ist dazu für eine Datenübertragung elektrisch mit der Steuereinheit verbunden. Die Verbindung erfolgt über eine serielle Schnittstelle, wobei ein Verbindungskabel zwischen Speichereinheit und Steuereinheit zugleich der Energieversorgung der Speichereinheit und der Datenübertragung dient. Eine elektrische Versorgung des Getriebes über diese Verbindung ist nicht vorgesehen.

DE 200 13 501 U1 beschreibt eine Schaltungsanordnung zum Anschließen eines Aktuators an eine Steuereinheit. Der Aktuator, bei dem es sich um ein Magnetventil oder einen Hubmagneten handeln kann, wird über eine elektrische Verbindung mit der Steuereinheit mit elektrischer Energie versorgt, wobei die elektrische Energie in Form eines Gleichstroms mit überlagertem Wechselstrom konstanter Amplitude zur Verfügung gestellt wird. Eine Speichereinheit zur Speicherung von Eigenschaften des Aktuators ist nicht vorgesehen.

DE 196 36 031 A1 beschreibt ein Bussystem zur Ausbildung eines Kornmunikationsnetzwerks in explosionsgefährdeten Umgebungen. Um eine Kommunikation zwischen elektrischen Vorrichtungen zu ermöglichen, werden hochfrequente Informationssignale auf einen der Energieversorgung dienenden Wechselstrom aufmoduliert.

DE 41 29 446 A1 beschreibt mittels elektromagnetischer Strahlung deaktivierbare Etikettensysteme zur Verwendung in einem elektronischen Artikelüberwachungssystem. Eine direkte elektrische Kontaktierung der Etiketten ist nicht vorgesehen.

Der Erfindung liegt die Aufgabe zugrunde, ein elektromagnetisches Betäti-gungselement und ein Verfahren zum Bereitstellen und Abrufen von Kenndaten für ein solches Element zu schaffen, bei dem eine Übertragung von Kenndaten einfach und mit preiswerten Mitteln gewährleistet ist.

Diese Aufgabe wird durch ein elektromagnetisches Betätigungselement mit den Merkmalen von Anspruch 1 und durch ein Verfahren mit den Merkmalen von Anspruch 11 gelöst. Vorteilhafte Weiterbildungen der Erfindung sind Gegenstand der abhängigen Ansprüche.

Ein erfindungsgemäßes elektromagnetisches Betätigungselement umfasst eine Speichereinheit, die von einem ersten externen System beschrieben und von einem zweiten externen System ausgelesen werden kann, und einen elektrischen Anschluss, um dem Betätigungselement elektrische Energie zu dessen Ansteuerung zuzuführen, wobei der elektrische Anschluss mit der Speichereinheit elektrisch verbunden ist und durch ihn elektrische Signale an die Speicher einheit und/oder von der Speichereinheit übertragbar sind, um Kenndaten des Betätigungselements in die Speichereinheit zu schreiben und/oder daraus auszulesen.

Das erfindungsgemäße Betätigungselement zeichnet sich dadurch aus, dass der elektrische Anschluss eine Doppelfunktion wahrnimmt: er dient sowohl zur Versorgung des Betätigungselements mit elektrischer Energie als auch zur Informationsübertragung an die Speichereinheit bzw. von der Speichereinheit, indem elektrische Signale an diese Speichereinheit oder von dieser übertragen werden. Mittels dieser elektrischen Signale können spezifische Kenndaten des Betätigungselements in der Speichereinheit gespeichert und/oder daraus ausgelesen werden. Die Verwendung des elektrischen Anschlusses zusätzlich zum Zwecke der Informationsübertragung ermöglicht niedrige bzw. günstige Herstellungskosten für das Betätigungselement. Da das Betätigungselement neben dem elektrischen Anschluss, der herkömmlich ohnehin vorhanden ist, keine weiteren Anschlüsse für einen Zugriff auf die Speichereinheit aufweist, ist von außen nicht ohne weiteres erkennbar, dass bei dem Betätigungselement eine Informationsspeicherung von Kenndaten erfolgt. Hierdurch ist ein wirkungsvoller Schutz vor der Verwendung von nicht autorisierten Fremderzeugnissen gegeben.

In vorteilhafter Weiterbildung der Erfindung kann der elektrische Anschluss mit dem ersten System und/oder mit dem zweiten System verbunden werden. Dies kann dadurch erfolgen, dass das erste System bzw. das zweite System einen eigenen elektrischen Anschluss aufweisen, der an jenen des Betätigungselements angepasst und z.B. komplementär dazu ausgebildet ist. Der elektrische Anschluss des Betätigungselements ist zweckmäßig als 2-polige Steckverbindung ausgebildet, die einen verliersicheren Kontakt gewährleistet.

Im Hinblick auf die erläuterte Doppelfunktion des elektrischen Anschlusses kann die im Wesentlichen gleichzeitige Versorgung mit elektrischer Energie und die Übertragung von Informationen mittels der elektrischen Signale zum Beispiel durch Nutzung von unterschiedlichen Zeitfenstern realisiert werden. Alternativ dazu werden verschiedene Frequenzen ausgenutzt, wobei die Energieversorgung des Betätigungselements durch geregelten Gleichstrom mit überlagertem niederfrequenten Wechselstrom konstanter Amplitude erfolgen kann. In letzterem Fall kann die Energieversorgung der Speichereinheit ebenfalls durch den geregelten Gleichstrom oder durch den niederfrequenten Wechselstrom erfolgen. Für eine geeignete Signaltrennung kann das Beschreiben und/oder das Auslesen der Speichereinheit zur Übertragung der Kenndaten durch einen überlagerten höherfrequenten Wechselstrom mit aufmoduliertem Signal erfolgen. Vorzugsweise sendet die Speichereinheit, wenn sie von dem zweiten externen System ausgelesen wird, die Kenndaten an das zweite externe System durch einen höherfrequenten Wechselstrom mit aufmoduliertem Signal. Die genannten aufmodulierten Signale werden wahlweise durch Amplituden- oder Frequenzmodulation erzeugt. In dieser Weise ist insbesondere ein gleichzeitiges Ansteuern des Betätigungselements zum Beispiel beim Betrieb eines Kraftfahrzeugs und ein Auslesen der Speichereinheit durch das zweite externe System möglich.

In vorteilhafter Weiterbildung der Erfindung können die Kenndaten mittels des höherfrequenten Wechselstroms zeitversetzt zur Ansteuerung des Geräts bzw. der Speichereinheit übertragen werden. Die Ansteuerung der Speichereinheit erfolgt wie vorstehend erläutert durch den geregelten Gleichstrom oder durch den niederfrequenten Wechselstrom. Jedoch erfolgt die Informationsübertragung bzw. die Übertragung der Kenndaten ausschließlich durch hochfrequenten Wechselstrom, der keine praktische Auswirkung auf das Gerät hat. Die Versorgung der elektronischen Speicherschaltung kann sowohl durch Gleich- als auch durch Wechselstrom erfolgen. Jedoch ist aus Sicherheitsgründen eine hochfrequente Wechselstromversorgung vorzuziehen. Beim Betrieb des Geräts kann dann die Versorgung der Speicherschaltung abgeschaltet sein, wodurch eine Fehlerfunktion während dieses Betriebs ausgeschlossen ist.

Die Informationsübertragung wird durch zusätzliche redundante Datenübertragung vor Störungen weitgehend abgesichert. Aus Sicherheitsgründen vor ungewolltem Überschreiben der gespeicherten Daten wird zusätzlich ein Schreibschutz integriert. Es versteht sich, dass dieser Schreibschutz für einen korrekten Speichervorgang separat abzuschalten ist. In vorteilhafter Weiterbildung der Erfindung kann die Speichereinheit eine elektronische Schaltung und einen Datenspeicher umfassen. Vorzugsweise kann hierbei die elektronische Schaltung der Speichereinheit auf ein geeignetes Signal des ersten externen Systems hin Kenndaten entgegennehmen und in dem Datenspeicher ablegen. Mutatis mutandis gilt dies für das Auslesen der Speichereinheit, wobei deren elektronische Schaltung auf ein Signal des zweiten externen Systems hin die Kenndaten an das zweite externe System abgibt. Die elektrische Versorgung der elektronischen Schaltung der Speichereinheit kann vorteilhaft über den elektrischen Anschluss erfolgen, der auch das Betätigungselement mit elektrischer Energie versorgt.

Bei einer alternativen Ausführungsform kann die Speichereinheit des Betätigungselements eine Mehrzahl aus passiven Bauelementen in Form von Schwingkreisen aufweisen, wobei jedem Schwingkreis jeweils eine Schmelzsicherung zugewiesen ist. Die Schwingkreise lassen sich durch hochfrequente Signale in Resonanzen bringen, wobei oberhalb einer bestimmten Stärke dieser hochfrequenten Signale bei ausgewählten Schwingkreisen im Falle von Resonanz die zugeordneten Schmelzsicherungen durchschmelzen. Zweckmäßigerweise werden dann die Kenndaten dual kodiert den charakteristischen Frequenzen zugeordnet. Es sind jedoch auch andere Kodierungen möglich. Zum Auslesen der Kenndaten werden durch das zweite externe System wiederum hochfrequente Signale mit allen charakteristischen Frequenzen an die Speichereinheit gesandt, wobei nun jedoch die Stärke der hochfrequenten Signale so niedrig ist, dass die noch intakten Schmelzsicherungen nicht durchschmelzen. Die erzeugten Resonanzen der Schwingkreise, deren Schmelzsicherungen noch intakt sind, werden von dem zweiten externen System gemessen, erkannt und gemäß der Kodierung zu entsprechenden Kenndaten verarbeitet.

Bei dem erfindungsgemäßen elektromagnetischen Betätigungselement kann es sich um ein Ventil, eine Dosierpumpe oder ein Stellorgan in Form eines Aktors oder dergleichen handeln. Des weiteren kann das erste externe System aus einem Prüfstand gebildet sein, mittels dem technische Datenspezifikationen bzw. spezifische Kenndaten eines konkreten Betätigungselements gemessen werden können. Bei dem zweiten externen System kann es sich um eine Bordelektronik eines Fahrzeugs handeln, die das Betätigungselement auf Grundlage der in der Speichereinheit gespeicherten Kenndaten ansteuert.

Ein erfindungsgemäßes Verfahren zum Bereitstellen und Abrufen von Kenndaten für ein elektromagnetisches Betätigungselement, das zur Ansteuerung einen elektrischen Anschluss und eine Speichereinheit umfasst, weist folgende Schritte auf:
- Erzeugen von Kenndaten des Betätigungselements mittels eines ersten externen Systems,
- Übertragen von elektrischen Signalen von dem ersten externen System an die Speichereinheit des Betätigungselements, um darin die Kenndaten zu speichern,
- Auslesen der in der Speichereinheit gespeicherten Kenndaten durch ein zweites externes System, so dass das zweite externe System das Betätigungselement auf Grundlage der Kenndaten ansteuert,
wobei der elektrische Anschluss sowohl zur Übertragung von elektrischer Energie an das Betätigungselement zu dessen Ansteuerung als auch zur Übertragung der elektrischen Signale zum Speichern der Kenndaten in der Speichereinheit und/oder zum Auslesen der in der Speichereinheit gespeicherten Kenndaten durch das zweite externe System verwendet wird.

Bei diesem Verfahren übernimmt der elektrische Anschluss eine Doppelfunktion, so dass ein separater elektrischer Anschluss, der ausschließlich zur Übertragung der Kenndaten mittels der elektrischen Signale dienen würde, nicht notwendig ist.

Die Vorteile des Betätigungselements und des Verfahrens nach der Erfindung spiegeln sich in geringen Herstellungskosten wieder, weil auf separate elektrische Anschlüsse verzichtet werden kann und die Speichereinheit einen vergleichsweise einfachen Aufbau aufweist. Eine aufwendige Ansteuerelektronik in dem Betätigungselement ist nicht erforderlich, da zur Ansteuerung des Betätigungselements auf eine Ansteuerelektronik auf Seiten des Kunden zurückgegriffen werden kann. Schließlich ist die Handhabung insbesondere für den Kunden erheblich einfacher, da kein Scanvorgang für ein Zuweisen von Kundendaten zu einem bestimmten Betätigungselement erforderlich ist. Auch im Fall eines späteren Austausches des Betätigungselements oder der kundenseitigen Elektronik ist die richtige Zuordnung der Kenndaten gewährleistet. Da von außen des Betätigungselements nicht ohne weiteres erkennbar ist, dass mittels einer Speichereinheit Kenndaten in Verbindung mit dem Betätigungselement gespeichert sind, sind Hersteller und Anwender auch vor dem Einsatz ungeeigneter Geräte bzw. vor unerlaubten Nachahmungen des Betätigungselements geschützt, weil die Speichereinheit und insbesondere deren Speichereinhalt nicht ohne Weiteres nachgeahmt bzw. kopiert werden kann.

In vorteilhafter Weiterbildung des erfindungsgemäßen Verfahrens kann die Übertragung der Kenndaten mittels des höherfrequenten Wechselstroms zeitversetzt zur Ansteuerung des Gerätes bzw. der Speichereinheit erfolgen. Diese Logik ist auch als Timesharing bezeichnet. Zur Vermeidung von Wiederholungen bezüglich der zeitversetzten Informationsübertragung wird auf die Erläuterung des erfindungsgemäßen Betätigungselements an entsprechender Stelle verwiesen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.
Die Erfindung ist nachfolgend anhand mehrerer Ausführungsformen in der Zeichnung schematisch dargestellt und wird unter Bezugnahme auf die Zeichnung ausführlich beschrieben.

Es zeigen:
- Figur 1: ein erfindungsgemäßes Betätigungselement zusammen mit einem ersten externen System und einem zweiten externen System,
- Figur 2: eine Speichereinheit des Betätigungselements von Figur 1,
- Figur 3: eine alternative Speichereinheit des Betätigungselements von Figur 1,
- Figur 4: ein Flussdiagramm zum Messen von Kenndaten des Betätigungselements durch das erste externe System und Speichern dieser Kenndaten in der Speichereinheit des Betätigungselements,
- Figur 5: ein Flussdiagramm zum Auslesen der Kenndaten aus der Speichereinheit durch das zweite externe System,
- Figur 6: ein Flussdiagramm zum Messen und Speichern von Kenndaten analog zu Figur 4, gemäß einer alternativen Ausführungsform, und
- Figur 7: ein Flussdiagramm zum Auslesen der Kenndaten aus der Speichereinheit analog zu Figur 5, gemäß einer alternativen Ausführungsform.

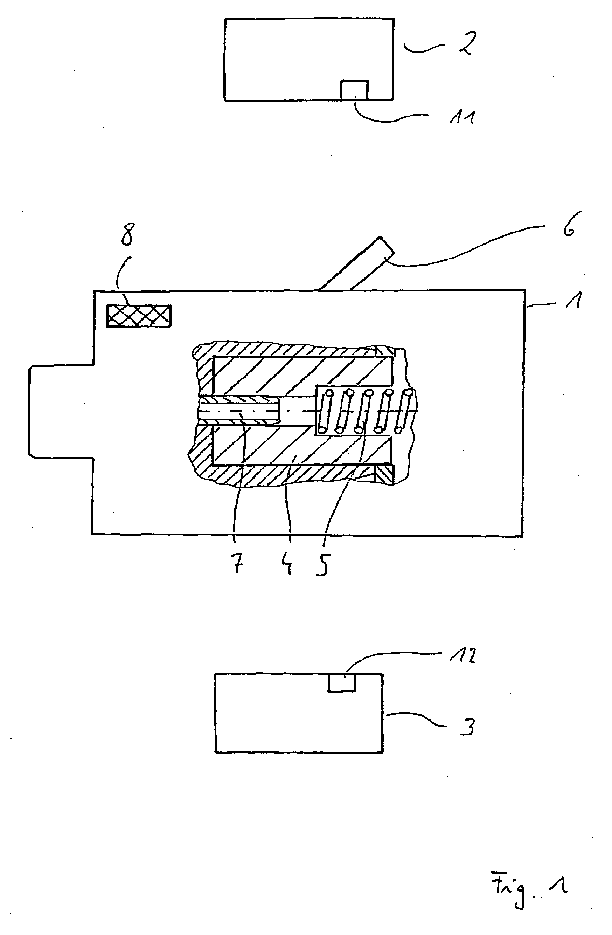

Figur 1 zeigt schematisch ein elektromagnetisches Betätigungselement 1 zusammen mit einem ersten externen System 2 und einem zweiten externen System 3. Bei dem elektromagnetischen Betätigungselement 1 handelt es sich um ein Magnetventil, das in bekannter Weise einen translatorisch angetriebenen Magnetkolben umfasst. Dieser Magnetkolben ist in der Darstellung von Figur 1 in dem Teil-Aufbruch mit dem Bezugszeichen 4 versehen. Der Magnetkolben 4 ist durch eine Spiralfeder 5 vorgespannt und wird durch eine (nicht gezeigte) Spule entgegen der Federvorspannung angetrieben, um dadurch eine Ventilöffnung zu öffnen bzw. zu schließen. Die Funktionsweise des Magnetventils 1 in Bezug auf das Öffnen und Schließen ist im Stand der Technik bekannt und deshalb an dieser Stelle nicht weiter im Detail erläutert.

Es versteht sich, dass das elektromagnetische Betätigungselement 1 auch als elektromagnetisch angetriebene Dosierpumpe, als elektromagnetisch betätigter Aktor in Form eine Stellgliedes oder dergleichen oder in Form eines anderen Ventils aufgeführt sein kann. Nachfolgend wird das Betätigungselement 1 nur als Magnetventil bezeichnet, ohne dass darin eine Einschränkung ausschließlich auf ein solches Bauteil zu verstehen ist.

Das Magnetventil 1 weist einen elektrischen Anschluss 6 auf, der dem Zuführen elektrischer Energie zur Spule dient. Wenn die Spule mittels des elektrischen Anschlusses 6 bestromt wird, verschiebt sich der Magnetkolben 4 entlang seiner Längsachse 7, um die Ventilöffnung wunschgemäß zu betätigen. Der elektrische Anschluss 6 ist zweckmäßiger Weise als 2-polige Steckverbindung ausgeführt und nachfolgend nur als solche bezeichnet, ohne darin eine Einschränkung zu verstehen. Der elektrische Anschluss 6 kann auch in beliebig anderer Weise ausgeführt sein, solange ein störungsfreies Zuführen von elektrischer Energie bzw. von elektrischen Signalen wie nachstehend noch zu erläutern gewährleistet ist.

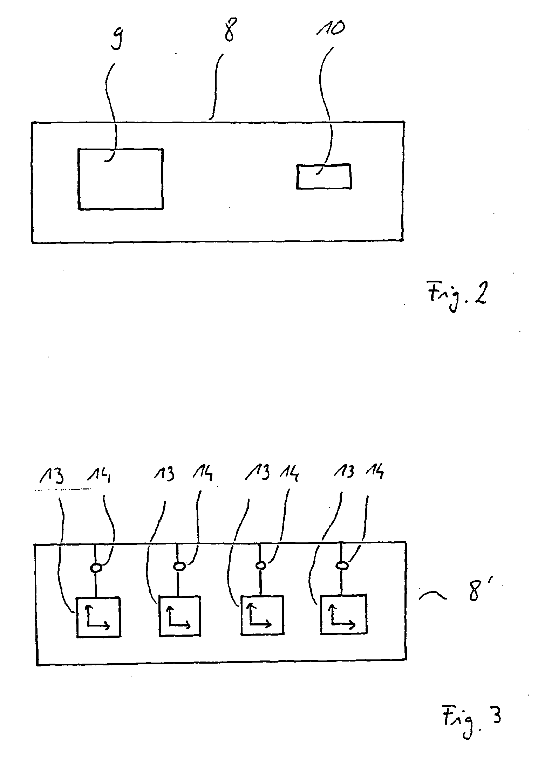

Das Magnetventil 1 umfasst des weiteren eine Speichereinheit 8, die mit der 2-poligen Steckverbindung 6 elektrisch verbunden ist. In Figur 2 ist die Speichereinheit 8 im Detail gezeigt. Sie umfasst eine elektronische Schaltung 9 und einen Datenspeicher 10, der als EEPROM ausgeführt sein kann.

Das erste externe System 2 kann zum Beispiel als Prüfstand ausgebildet sein und dient dazu, spezifische Kenndaten des Magnetventils 1 nach der Montage und vor einer Auslieferung an den Kunden zu messen. Bei dem Magnetventil 1 wird eine hohe Genauigkeit für bestimmte Kenndaten wie Öffnungsdruck, Schaltzeit, Durchflussmenge oder Fördermenge verlangt, die durch eine enge Tolerierung der Einzelteile des Magnetventils 1 nicht oder nur mit unvertretbar hohen Kosten erreicht werden kann. Deshalb ist es sinnvoll, die durch das erste externe System 2 bzw. den Serienprüfstand ohnehin ermittelten Informationen über die Größe solcher Kenndaten an den Kunden zu übermitteln, der diese Kenndaten in seine Ansteuerelektronik bzw. das zweite externe System 3 überträgt. Das zweite externe System 3 verwendet die Kenndaten zur Kompensation der Ansteuersignale derart, das die geforderte Genauigkeit in der Steuerung bzw. Regelung des Kundensystems erreicht wird. Dies gilt nicht nur für ein Magnetventil, sondern in gleicher Weise für andere elektromagnetische Geräte, z.B. für elektromagnetisch betätigte Aktoren oder auch Dosierpumpen.

Die vorstehend genannten Kenndaten werden zum Beispiel in Form einer Tabelle aufgezeichnet, in der Informationen über Druck, Durchfluss, Fördermenge und Durchflussmenge jeweils als Funktion des Stroms enthalten sind. Bei einem Magnetventil ist die Fördermenge üblicherweise eine Funktion der Druckdifferenz. Gleichwohl hängt die Schaltzeit des Magnetventils zumeist vom Hub des Magnetkolbens 4 ab. Ohne die Kenntnis von exakten Toleranzen, die sich von Magnetventil zu Magnetventil unterscheiden können, ist jedoch eine exakte Einstellung der Schaltzeit nicht möglich. Deshalb werden mittels eines Prüfstands in Form des externen Systems 2 genaue Kenndaten für ein jeweiliges Magnetventil ermittelt, um mögliche Fertigungstoleranzen zu berücksichtigen. Die Bestimmung von solchen Kenndaten ermöglicht ein exaktes Ansteuern des Magnetventils 1 durch das zweite externe System 3, das eine Steuerelektronik des Kunden umfassen kann.

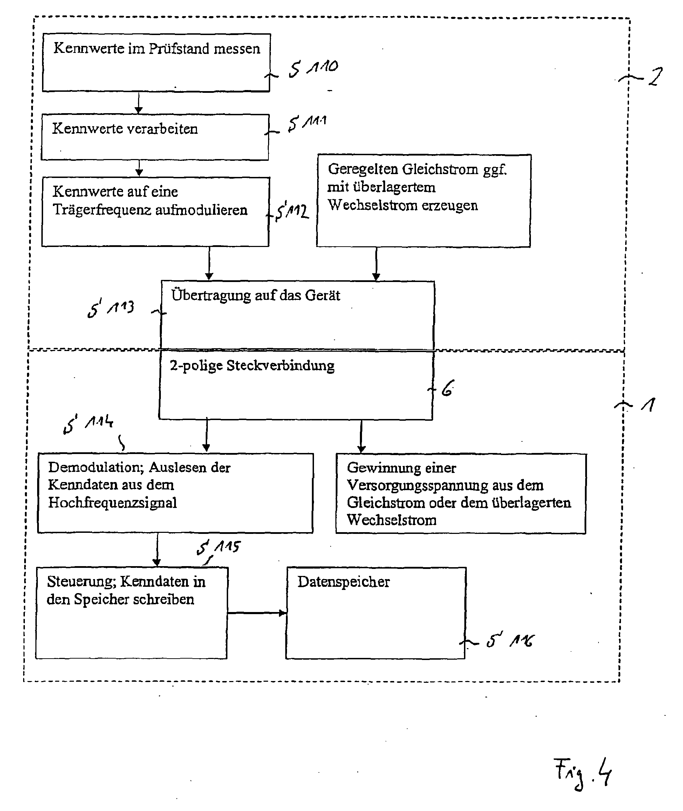

Beim Messen der Kenndaten des Magnetventils 1 durch das erste externe System 2 wird das Magnetventil 1 mit der 2-poligen Steckverbindung 6 an das erste externe System 2 angeschlossen. Hierzu umfasst das erste externe System 2 eine Anschlussbuchse 11, in die die 2-polige Steckverbindung 6 eingesteckt wird. Hierdurch ist eine elektrische Verbindung zwischen dem Magnetventil 1 und dem ersten externen System 2 hergestellt. Das Messen von Kenndaten ist im Einzelnen unter Bezugnahme auf Figur 4 erläutert. Wenn alle erforderlichen Kenndaten durch das erste externe System 2 gemessen worden sind, werden diese Kenndaten in der Speichereinheit 8 des Magnetventils 1 gespeichert. Hierzu werden elektrische Signale von dem ersten externen System über die 2-polige Steckverbindung 6 an die Speichereinheit 8 übertragen, um dadurch die Kenndaten in den Datenspeicher 10 der Speichereinheit 8 zu schreiben bzw. darin zu speichern. Die 2-polige Steckverbindung 6 dient nicht nur zum Übertragen von elektrischer Energie an die Spule des Magnetventils 1, sondern auch zur Informationsübertragung, d.h. zum Übertragen der von dem ersten externen System 2 gemessenen Kenndaten an die Speichereinheit 8 des Magnetventils 1. Die 2-polige Steckverbindung 6 übernimmt somit eine Doppelfunktion, so dass ein separater elektrischer Anschluss ausschließlich zum Übertragen der Kenndaten in die Speichereinheit 8 nicht erforderlich ist.

Durch eine feste Anbringung der Speichereinheit 8 an dem Magnetventil 1 ist sichergestellt, dass spezifische Kenndaten, die in der Speichereinheit 8 wie erläutert abgespeichert sind, stets einem konkreten Magnetventil 1 zugewiesen sind. Die Gefahr von Verwechslungen von verschiedenen Datensätzen von Kenndaten ist nicht möglich. Nach Auslieferung des Magnetventils 1 an einen Kunden kann dieser mittels des zweiten externen Systems 3, das eine Steuerschaltung aufweisen kann, die Kenndaten aus der Speichereinheit 8 auslesen und auf deren Grundlage einen angepassten Betrieb des Magnetventils 1 mit individueller Ansteuerung einrichten. Hierzu umfasst das zweite externe System 3 eine Anschlussbuchse 12, die an die 2-polige Steckverbindung 6 des Magnetventils angepasst ist. Wie vorstehend erläutert, dient die 2-polige Steckverbindung 6 nicht nur zum Übertragen bzw. Auslesen der Kenndaten, sondern auch zum Bestromen der Spule des Magnetventils 1.

Nachstehend ist unter Bezugnahme auf Figur 4 eine Schrittabfolge beim Messen von Kenndaten des Magnetventils 1 durch das erste externe System 2 und ein anschließendes Speichern dieser Kenndaten in der Speichereinheit 8 erläutert.

Nachdem das Magnetventil 1 in das erste externe System 2 eingesetzt bzw. damit verbunden ist, werden in Schritt S110 die Kenndaten des Magnetventils 1 gemessen. Nach einer Verarbeitung der Kenndaten in Schritt S111 werden die Kenndaten auf eine Trägerfrequenz aufmoduliert, gemäß Schritt S112. Während der Messung der Kenndaten auf dem Prüfstand bzw. durch das erste externe System 2 wird das Magnetventil 1 duch geregelten Gleichstrom mit überlagertem niederfrequenten Wechselstrom konstanter Amplitude bestromt bzw. betrieben. Nach Abschluss einer vollständigen Messung aller erforderlichen Kenndaten werden diese in Schritt S113 mittels der 2-poligen Steckverbindung 6 an die Speichereinheit 8 übertragen. Dies erfolgt durch Aussenden von elektrischen Signalen an die Speichereinheit, z.B. durch einen überlagerten höherfrequenten Wechselstrom als Träger, wobei die elektrischen Signale aufmoduliert sind. Die Aufmodulation kann wahlweise mittels Amplituden- oder Frequenzmodulation erfolgen. Zur gemeinsamen Nutzung der 2-poligen Steckverbindung sowohl zur Übertragung der elektrischen Leistung an die Spule als auch der Kenndaten an die Speichereinheit 8 kann alternativ zur Nutzung dieser verschiedenen Frequenzen auch eine Nutzung von verschiedenen Zeitfenstern vorgesehen sein.

Sobald die elektrischen Signale von dem ersten externen System 2 an der elektronischen Schaltung 9 der Speichereinheit 8 eintreffen, werden die Kenndaten von der elektronischen Schaltung 9 in dem Datenspeicher 10 gespeichert. Hierbei erfolgt gemäß Schritt S114 eine Demodulation des höherfrequenten Wechselstroms mit den aufmodulierten Signalen, um die Kenndaten aus diesem Hochfrequenzsignal auszulesen. Das Schreiben der Kenndaten in den Datenspeicher 10 durch die elektronische Schaltung 9 erfolgt dann im Schritt S115, so dass im Ergebnis die Kenndaten in dem Datenspeicher gemäß Schritt S116 gespeichert sind. Bei der Durchführung der Schritte S114 bis S116 kann eine Versorgungsspannung für die elektronische Schaltung 9 der Speichereinheit 8 aus dem Gleichstrom oder aber aus dem überlagerten Wechselstrom gewonnen werden, der an der 2-poligen Steckverbindung 6 anliegt.

In der Figur 4 sind die Schritte S110 bis S113 schematisch vereinfacht dem ersten externen System 2 zugewiesen, und die Schritte S114 bis S116 sind schematisch vereinfacht dem Magnetventil 1 zugewiesen. Diese Zuweisung soll verdeutlichen, in welchem Kontext die einzelnen Schritte durchgeführt werden.

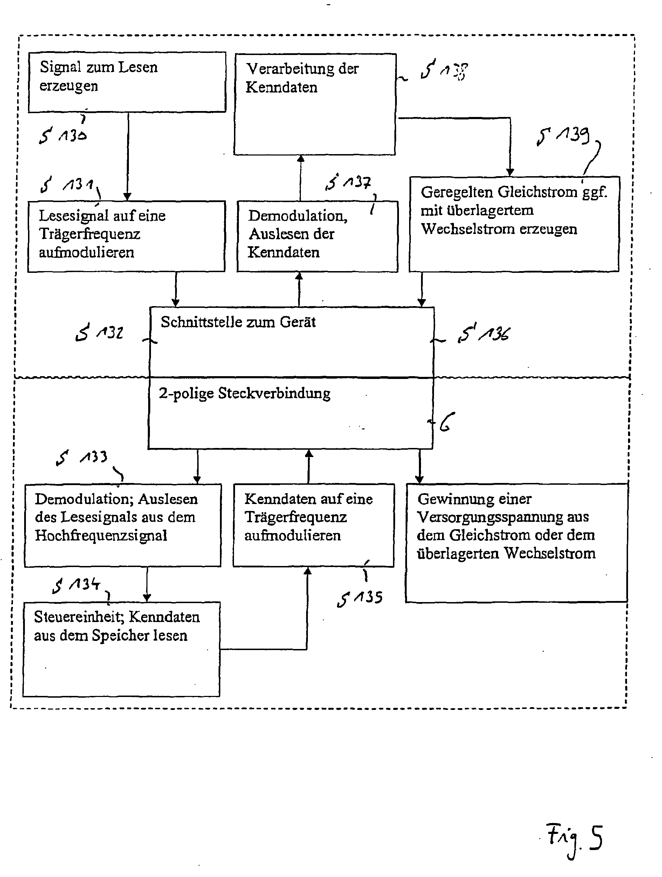

Nachstehend ist unter Bezugnahme auf Figur 5 eine Schrittabfolge zum Auslesen der Kenndaten durch das zweite externe System 3 erläutert. Nachdem das Magnetventil 1 mit seiner 2-poligen Steckverbindung 6 an die Anschlussbuchse 12 des zweiten externen Systems 3 angeschlossen worden ist, werden in Schritt S130 durch das zweite externe System 3 Signale zum Auslesen des Datenspeichers 10 erzeugt. In Schritt S131 wird dieses Lesesignal auf eine Trägerfrequenz aufmoduliert, bevor es in Schritt S132 über die 2-polige Steckverbindung 6 zum Magnetventil 1 gesendet wird. Durch eine geeignete Demodulation in Schritt S133 wird das Lesesignal aus dem Hochfrequenzsignal ausgelesen, um gemäß Schritt S134 die Kenndaten aus dem Datenspeicher 10 der Speichereinheit 8 zu lesen. Hiernach werden gemäß Schritt S135 die Kenndaten auf eine Trägerfrequenz aufmoduliert und in Schritt S136 zurück an das kundenseitige zweite externe System 3, das eine Steuerschaltung aufweisen kann, zurückgesendet. In Schritt S137 werden dann mittels einer geeigneten Demodulation die Kenndaten ausgelesen, um anschließend in Schritt S138 die Kenndaten entsprechend zu verarbeiten.

Auf Grundlage der in Schritt 138 verarbeiteten Kenndaten erzeugt dann die Steuerschaltung des zweiten Systems 3 in Schritt S139 einen geregelten Gleichstrom, ggf. mit überlagertem Wechselstrom, um damit das Magnetventil 1 zu dessen Betrieb anzusteuern. Die Versorgungsspannung für die elektronische Schaltung 9, die zuvor für die Schritte S133 bis S136 benötigt wird, kann aus dem Gleichstrom oder dem überlagerten Wechselstrom gewonnen, der an der 2-poligen Steckverbindung 6 anliegt.

In Figur 3 ist eine alternative Ausführungsform für die Speichereinheit gezeigt, und entsprechend mit dem Bezugszeichen 8' bezeichnet. Die Speichereinheit 8' unterscheidet sich von jener der Figur 2 darin, dass sie ausschließlich passive Bauelemente in Form von schwingungsfähige Schaltungen 13 bzw. Schwingkreisen aufweist, die keine Spannungsversorgung benötigen. Die Speichereinheit 8' umfasst eine Mehrzahl von solchen Schwingkreisen 13, die in Figur 3 schematisch vereinfacht dargestellt sind. In Figur 3 sind vier Schwingkreise 13 dargestellt, ohne darin eine Einschränkung zu sehen. Die Speichereinheit 8' kann auch mehr oder weniger als vier Schwingkreise 13 umfassen.
Jedem Schwingkreis 13 ist eine Schmelzsicherung 14 zugewiesen, deren Funktion nachstehend noch erläutert ist. Nachdem auf dem Prüfstand bzw. durch das erste externe System 2 die Kenndaten des Magnetventils 1 gemessen worden sind, werden zur Übertragung dieser Kenndaten an die Speichereinheit 8' einige ausgewählte Schwingkreise 13 durch starke hochfrequente Signal zur Resonanz gebracht. Die charakteristische Resonanzfrequenz eines jeweiligen Schwingkreises 13 legt dabei fest, welche Schwingkreise im Einzelnen beim Anliegen der hochfrequenten Signale in Resonanz geraten, wobei die Schmelzsicherungen 14 dieser Schwingkreise 13 beim Auftreten der Resonanz durchschmelzen. Hierdurch werden die Kenndaten zweckmäßigerweise dual kodiert den charakteristischen Frequenzen zugeordnet. Es sind jedoch auch andere Formen von Kodierungen möglich.

Beim Auslesen der Speichereinheit 8' durch die Steuerschaltung bzw. durch das zweite externe System 3 werden schwache hochfrequente Signale mit allen charakteristischen Frequenzen an die Speichereinheit 8' gesandt. Hierbei geraten zumindest einige der Schwingkreise 13, deren Schmelzsicherung 14 noch intakt ist, in Resonanz, ohne dass dabei die Schmelzsicherungen 14 durchschmelzen. Diese Resonanzen werden von der Steuerschaltung gemessen, erkannt und gemäß der Kodierung zu entsprechenden Kenndaten verarbeitet.

Bei der alternativen Ausführungsform des Magnetventils 1, bei der die Speichereinheit 8' eine Mehrzahl von Schwingkreisen 13 aufweist, bleibt die Doppelfunktion der 2-poligen Steckverbindung 6 unverändert erhalten. Dies bedeutet, dass die starken bzw. schwachen hochfrequenten Signale zum Beschreiben bzw. Auslesen der Speichereinheit 8' ebenfalls über die 2-polige Steckverbindung 6, die ansonsten zum Betromen der Spule des Magnetventils 1 dient, an die Speichereinheit 8' gesendet werden.

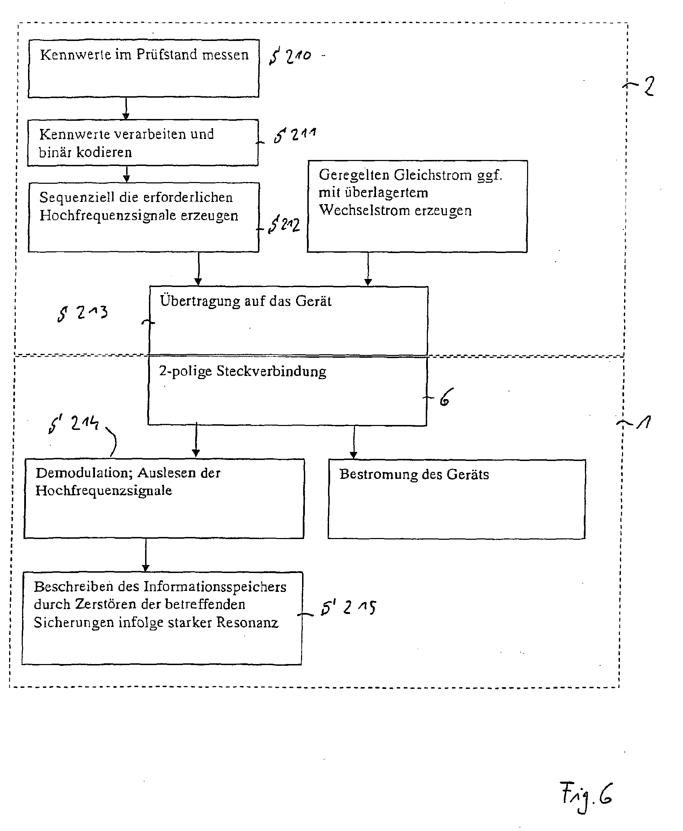

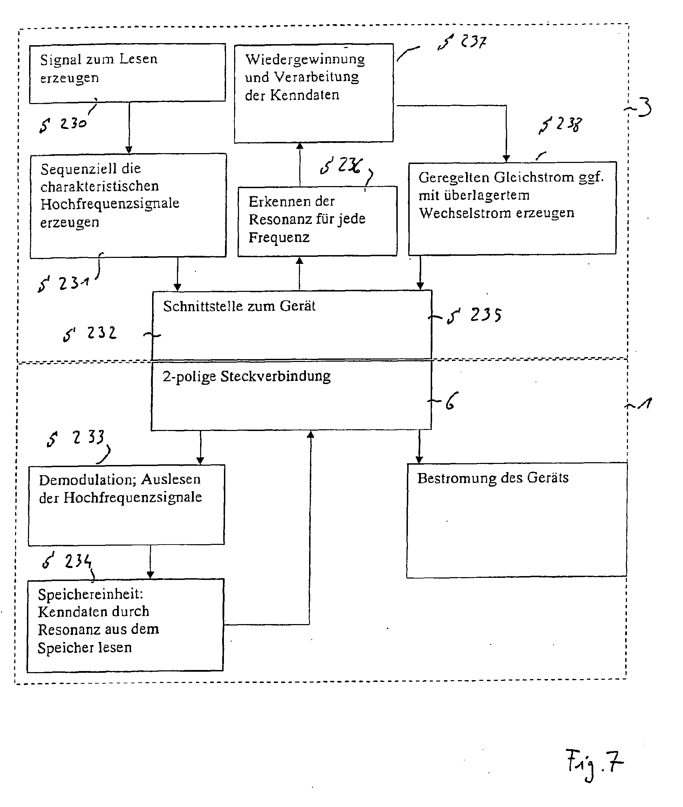

Nachstehend ist unter Bezugnahme auf die Figuren 6 und 7 ein Speichern und Auslesen der Kenndaten mit der Speichereinheit 8' gemäß Figur 3 ausführlich in Abfolge von einzelnen Schritten erläutert.

Wie in dem Flussdiagramm von Figur 6 gezeigt, werden nach einem Anschließen des Magnetventils 1 an das erste externe System 2 in Schritt S210 die Kenndaten des Magnetventils 1 gemessen, bevor die Kenndaten in Schritt S211 verarbeitet und binär kodiert werden. Die binäre Kodierung erfolgt wie vorstehend erläutert dadurch, dass ausgewählte Schwingkreise 13 in Resonanz geraten und dadurch ihre zugeordneten Schmelzsicherungen 14 zerstört werden. Hierzu werden in Schritt S212 die erforderlichen Hochfrequenzsignale mit einer ausreichenden Stärke erzeugt, die in Schritt S213 an das Magnetventil 1 bzw. dessen Speichereinheit 8 mittels der 2-poligen Steckverbindung übertragen werden. Zur Messung der Kenndaten insbesondere in Schritt S21 0 wird an das Magnetventil 1 ein geregelter Gleichstrom mit überlagertem niederfrequenten Wechselstrom angelegt.

Geräteseitig erfolgt in der Speichereinheit 8' nach Erhalt der Hochfrequenzsignale eine Demodulation gemäß Schritt S214, in dem die Hochfrequenzsignale ausgelesen werden. In Schritt S215 erfolgt dass Beschreiben der Speichereinheit 8' dadurch, dass die Schmelzsicherungen 14 von ausgewählten Schwingkreisen 13 infolge starker Resonanz zerstört werden. Auch bei den Schritten S214 und S215 erfolgt eine Bestromung des Magnetventils 1 über die 2-polige Steckverbindung 6.

Das Auslesen der Kenndaten durch das zweite externe System 3 ist in dem Flussdiagramm von Figur 7 dargestellt. Die Steuerschaltung des zweiten externen Systems 3 erzeugt in Schritt S230 Signale zum Auslesen der Speichereinheit 8', wonach in Schritt S231 sequentiell die charakteristischen Hochfrequenzsignale mit einer bestimmten Stärke erzeugt werden. Diese Hochfrequenzsignale in Schritt S232 über die 2-polige Steckverbindung 6 an das Magnetventil 1 übertragen.

Geräteseitig erfolgt in Schritt S233 eine Demodulation, wobei die Hochfrequenzsignale aus Schritt S231 ausgelesen werden. In Schritt S234 geraten die Schwingkreise 13 mit den intakten Schmelzsicherungen 14 in Resonanz, ohne dass dabei durch die schwachen hochfrequenten Signale die Schwingkreise zerstört werden. Hierdurch können die Kenndaten aus der Speichereinheit 8' ausgelesen werden. Durch Übertragung dieses Resonanzverhaltens in Schritt S235 über die 2-polige Steckverbindung 6 an die Steuerschaltung des zweiten externen Systems 3 kann letzteres die Resonanz für jede charakteristische Frequenz erkennen, gemäß Schritt S236, um hiernach in Schritt S237 diese Kenndaten einer Wiedergewinnung und Verarbeitung zu unterziehen. Als Ergebnis dessen erzeugt die Steuerschaltung des zweiten externen Systems 3 in Schritt S238 einen geregelten Gleichstrom mit überlagertem niederfrequenten Wechselstrom, der zum Betrieb des Magnetventils 1 gemäß Schritt S239 an die 2-polige Steckverbindung 6 angelegt wird.

Ungeachtet der Art der Speichereinheit erfolgt bei dem erfindungsgemäßen Magnetventil 1 ein Bestromen der Spule und ein Übertragen der Kenndaten oder von der Speichereinheit gemeinsam über die 2-polige Steckverbindung 6. Falls die Speichereinheit 8 eine elektronische Schaltung 9 aufweist, erfolgt deren Energieversorgung durch den ohnehin vorhandenen Ansteuerstrom für die Spule des Magnetventils 1. Da die Speichereinheit stets mit dem Magnetventil 1 verbunden bleibt, erfolgt eine Übertragung der Informationen bzw. der Kenndaten stets mit dem Magnetventil 1 selbst, um Verwechslungen und Informationsverluste auf Kundenseite zu vermeiden. Auf Grundlage der am Prüfstand gemessenen Kenndaten eines bestimmten Magnetventils 1 kann kundenseitig eine Kompensation vorgenommen werden, die eine erhebliche Verbesserung der Genauigkeit beim Betrieb des Magnetventils 1 bewirkt. Zusätzlich wirkt eine solche Verbindung von spezifischen Kenndaten zu einem konkreten Magnetventil auch als Schutz gegen den Einsatz ungeeigneter Geräte oder eine unerlaubte Nachahmung des Magnetventils zum Beispiel durch Produktpiraten.

## Patentansprüche

1. Elektromagnetisches Betätigungselement, umfassend
eine Speichereinheit (8; 8'), die von einem ersten externen System (2) beschreibbar und von einem zweiten externen System (3) auslesbar ist, und
einen elektrischen Anschluss (6), um dem Betätigungselement (1) elektrische Energie zu dessen Ansteuerung zuzuführen,
wobei der elektrische Anschluss (6) mit der Speichereinheit (8; 8') elektrisch verbunden ist,
wobei durch den Anschluss elektrische Signale an die Speichereinheit (8; 8') und/oder von der Speichereinheit (8; 8') übertragbar sind, um Kenndaten des Betätigungselements (1) in die Speichereinheit (8; 8') zu schreiben und/oder daraus auszulesen, **dadurch gekennzeichnet,**
**dass** das erste externe System (2) ein Prüfstand ist,
**dass** das zweite externe System (3) eine Bordelektronik eines Fahrzeugs ist, die das Betätigungselement auf Grundlage der in der Speichereinheit (8, 8') gespeicherten Kenndaten ansteuert, und
**dass** das Betätigungselement (1) als Pumpe oder Ventil ausgebildet ist.

2. Betätigungselement nach Anspruch 1, bei dem der elektrische Anschluss (6) zweipolig ist.

3. Betätigungselement nach Anspruch 1 oder 2, bei dem der elektrische Anschluss (6) mit dem ersten System (2) und/oder mit dem zweiten System (3) verbindbar ist.

4. Betätigungselement nach einem der Ansprüche 1 bis 3, bei dem die Energieversorgung des Betätigungselements durch geregelten Gleichstrom mit überlagertem niederfrequenten Wechselstrom konstanter Amplitude erfolgt.

5. Betätigungselement nach Anspruch 4, bei dem die Energieversorgung der Speichereinheit (8; 8') durch den geregelten Gleichstrom oder durch den niederfrequenten Wechselstrom erfolgt.

6. Betätigungselement nach Anspruch 5, bei dem das Beschreiben und/oder das Auslesen der Speichereinheit (8; 8') zur Übertragung der Kenndaten durch einen überlagerten höherfrequenten Wechselstrom mit aufmoduliertem Signal erfolgt.

7. Betätigungselement nach Anspruch 6, bei dem die Speichereinheit die Kenndaten an das zweite externe System (3) durch einen höherfrequenten Wechselstrom mit aufmoduliertem Signal sendet und bei dem die Kenndaten durch den höherfrequenten Wechselstrom zeitversetzt zur Energieversorgung der Speichereinheit (8; 8') übertragbar sind.

8. Betätigungselement nach einem der Ansprüche 1 bis 7, bei dem die Speichereinheit (8) eine elektronische Schaltung (9) und einen Datenspeicher (10), der als EEPROM ausgebildet ist, umfasst.

9. Betätigungselement nach einem der Ansprüche 1 bis 7, bei dem die Speichereinheit (8') eine Mehrzahl aus passiven Bauelementen (13) in Form von Schwingkreisen aufweist, wobei jedem Schwingkreis jeweils eine Schmelzsicherung (14) zugewiesen ist und bei dem die Schwingkreise (13) durch hochfrequente Signale in Resonanz bringbar sind, wobei ausgewählte Schmelzsicherungen (14) bei Resonanzerregung ihres jeweils zugeordneten Schwingkreises (13) oberhalb einer bestimmten Stärke der hochfrequenten Signale schmelzen.

10. Betätigungselement nach einem der Ansprüche 1 bis 9, das ein Ventil, eine Dosierpumpe oder ein Stellorgan bildet.

11. Verfahren zum Bereitstellen und Abrufen von Kenndaten für ein elektromagnetisches Betätigungselement, das zur Ansteuerung einen elektrischen Anschluss (6) und eine Speichereinheit (8; 8') umfasst, mit dem Schritten:
- Erzeugen von Kenndaten des Betätigungselements mittels eines ersten externen Systems (2),
- Übertragen von elektrischen Signalen von dem ersten externen System (2) an die Speichereinheit (8; 8') des Betätigungselements (1), um darin die Kenndaten zu speichern,
- Auslesen der in der Speichereinheit (8; 8') gespeicherten Kenndaten durch ein zweites externes System (3), so dass das zweite externe System das Betätigungselement auf Grundlage der Kenndaten ansteuert,
wobei der elektrische Anschluss (6) sowohl zur Übertragung von elektrischer Energie an das Betätigungselement zu dessen Ansteuerung als auch zur Übertragung der elektrischen Signale zum Speichern der Kenndaten in der Speichereinheit (8; 8') und/oder zum Auslesen der in der Speichereinheit gespeicherten Kenndaten durch das zweite externe System verwendet wird,
**dadurch gekennzeichnet,**
**dass** das Betätigungselement (1) durch geregelten Gleichstrom mit überlagertem niederfrequenten Wechselstrom konstanter Amplitude mit Energie gespeist wird, und
**dass** das zweite externe System (3) eine Bordelektronik eines Fahrzeugs ist, die das Betätigungselement (1) auf Grundlage der in der Speichereinheit (8; 8') gespeicherten Kenndaten ansteuert.

12. Verfahren nach Anspruch 11, bei dem die Speichereinheit (8; 8') durch den geregelten Gleichstrom oder durch den niederfrequenten Wechselstrom mit Energie gespeist wird.

13. Verfahren nach Anspruch 12, bei dem die Kenndaten in der Speicherheinheit durch einen überlagerten höherfrequenten Wechselstrom mit aufmoduliertem Signal gespeichert (S112, S113, S114, S115) und ausgelesen werden (S133).

14. Verfahren nach Anspruch 13, bei dem die Speichereinheit die Kenndaten an das zweite externe System (3) durch einen höherfrequenten Wechselstrom mit aufmoduliertem Signal sendet (S135, S136) und bei dem die Kenndaten durch den höherfrequenten Wechselstrom zeitversetzt zur Ansteuerung der Speichereinheit übertragen werden.

15. Verfahren nach einem der Ansprüche 11 bis 14, bei dem das erste externe System (2) ein Prüfstand oder dergleichen ist.

## Claims

1. Electromagnetic operating element comprising
a memory unit (8; 8') which can be written to by a first external system (2) and can be read from by a second external system (3), and
an electrical connection (6) in order to supply electrical energy to the operating element (1) for the purpose of actuating the operating element,
with the electrical connection (6) being electrically connected to the memory unit (8; 8'),
it being possible for electrical signals to be transmitted to the memory unit (8; 8') and/or from the memory unit (8; 8') by the connection in order to write characteristic data about the operating element (1) to the memory unit (8; 8') and/or to read characteristic data about the said operating element from the said memory unit,
**characterized in**
**that** the first external system (2) is a test rig,
**that** the second external system (3) is an on-board electronics system of a vehicle, which on-board electronics system actuates the operating element on the basis of the characteristic data which is stored in the memory unit (8; 8'), and
**that** the operating element (1) is in the form of a pump or valve.

2. Operating element according to Claim 1, wherein the electrical connection (6) has two poles.

3. Operating element according to Claim 1 or 2, wherein the electrical connection (6) can be connected to the first system (2) and/or to the second system (3).

4. Operating element according to one of Claims 1 to 3, wherein energy is supplied to the operating element by a regulated direct current with a superimposed low-frequency alternating current of constant amplitude.

5. Operating element according to Claim 4, wherein energy is supplied to the memory unit (8; 8') by the regulated direct current or by the low-frequency alternating current.

6. Operating element according to Claim 5, wherein the memory unit (8; 8') is written to and/or read from, for the purpose of transmitting the characteristic data, by a superimposed higher-frequency alternating current with a signal modulated onto the said current.

7. Operating element according to Claim 6, wherein the memory unit sends the characteristic data to the second external system (3) by a higher-frequency alternating current with a signal modulated onto the said current, and wherein the characteristic data can be transmitted by the higher-frequency alternating current with a time delay in order to supply energy to the memory unit (8; 8').

8. Operating element according to one of Claims 1 to 7, wherein the memory unit (8) comprises an electronic circuit (9) and a data storage means (10) which is configured as an EEPROM.

9. Operating element according to one of Claims 1 to 7, wherein the memory unit (8') has a plurality of passive components (13) configured as oscillating circuits, with a respective fusible link (14) being allocated to each oscillating circuit, and wherein the oscillating circuits (13) can be caused to resonate by high-frequency signals, with selected fusible links (14) melting in the case of resonance excitation of their respectively associated oscillating circuit (13) above a certain strength of the high-frequency signals.

10. Operating element according to one of Claims 1 to 9, which forms a valve, a metering pump or an actuating element.

11. Method for providing or calling up characteristic data for an electromagnetic operating element which comprises an electrical connection (6) and a memory unit (8; 8') for actuation purposes, comprising the steps of:
- generating characteristic data about the operating element by means of a first external system (2),
- transmitting electrical signals from the first external system (2) to the memory unit (8; 8') of the operating element (1) in order to store the characteristic data in the said memory unit,
- reading of the characteristic data which is stored in the memory unit (8; 8') by a second external system (3), so that the second external system actuates the operating element on the basis of the characteristic data,
with the electrical connection (6) being used both to transmit electrical energy to the operating element for the purpose of actuating the said operating element, and also to transmit the electrical signals for the purpose of storing the characteristic data in the memory unit (8; 8') and/or for the purpose of reading of the characteristic data which is stored in the memory unit by the second external system, **characterized in**
**that** the operating element (1) is fed with energy by a regulated direct current with a superimposed low-frequency alternating current of constant amplitude, and
**that** the second external system (3) is an on-board electronics system of a vehicle, which on-board electronics system actuates the operating element (1) on the basis of the characteristic data which is stored in the memory unit (8; 8').

12. Method according to Claim 11, wherein the memory unit (8; 8') is fed with energy by the regulated direct current or by the low-frequency alternating current.

13. Method according to Claim 12, wherein the characteristic data in the memory unit is stored (S112, S113, S114, S115) and read (S133) by a superimposed higher-frequency alternating current with a signal modulated onto the said current.

14. Method according to Claim 13, wherein the memory unit sends (S135, S136) the characteristic data to the second external system (3) by a higher-frequency alternating current with a signal modulated onto the said current, and wherein the characteristic data is transmitted by the higher-frequency alternating current with a time delay for the purpose of actuating the memory unit.

15. Method according to one of Claims 11 to 14, wherein the first external system (2) is a test rig or the like.

## Revendications

1. Élément d'actionnement électromagnétique comprenant
une unité de mémorisation (8 ; 8') qui peut être écrite par un premier système externe (2) et lue par un deuxième système externe (3), et
une borne électrique (6) pour acheminer à l'élément d'actionnement (1) de l'énergie électrique en vue de sa commande,
la borne électrique (6) étant reliée électriquement à l'unité de mémorisation (8 ; 8')
des signaux électriques pouvant être transmis par le biais de la borne vers l'unité de mémorisation (8 ; 8') et/ou depuis l'unité de mémorisation (8 ; 8') afin d'écrire des caractéristiques de l'élément d'actionnement (1) dans l'unité de mémorisation (8 ; 8') ou de les lire depuis celle-ci,
**caractérisé en ce**
**que** le premier système externe (2) est un banc d'essais,
**que** le deuxième système externe (3) est une électronique embarquée d'un véhicule qui commande l'élément d'actionnement en se basant sur les caractéristiques enregistrées dans l'unité de mémorisation (8 ; 8') et que l'élément d'actionnement (1) est réalisé sous la forme d'une pompe ou d'une vanne.

2. Élément d'actionnement selon la revendication 1, dans lequel la borne électrique (6) est bipolaire.

3. Élément d'actionnement selon la revendication 1 ou 2, dans lequel la borne électrique (6) peut être reliée au premier système (2) et/ou au deuxième système (3).

4. Élément d'actionnement selon l'une des revendications 1 à 3, dans lequel l'alimentation en énergie de l'élément d'actionnement s'effectue par un courant continu régulé auquel est superposé un courant alternatif à basse fréquence d'amplitude constante.

5. Élément d'actionnement selon la revendication 4, dans lequel l'alimentation en énergie de l'unité de mémorisation (8 ; 8') s'effectue par le courant continu régulé ou par le courant alternatif à basse fréquence.

6. Élément d'actionnement selon la revendication 5, dans lequel l'écriture et/ou la lecture de l'unité de mémorisation (8 ; 8') en vue de la transmission des caractéristiques s'effectue par un courant alternatif à haute fréquence superposé sur lequel est modulé un signal.

7. Élément d'actionnement selon la revendication 6, dans lequel l'unité de mémorisation envoie les caractéristiques au deuxième système externe (3) par un courant alternatif à haute fréquence sur lequel est modulé un signal et dans lequel les caractéristiques peuvent être transmises par le courant alternatif à haute fréquence avec un décalage dans le temps en vue de l'alimentation en énergie de l'unité de mémorisation (8 ; 8').

8. Élément d'actionnement selon l'une des revendications 1 à 7, dans lequel l'unité de mémorisation (8) comprend un circuit électronique (9) et une mémoire de données (10) qui est réalisée sous la forme d'une EEPROM.

9. Élément d'actionnement selon l'une des revendications 1 à 7, dans lequel l'unité de mémorisation (8') présente une pluralité de composants passifs (13) sous la forme de circuits oscillants, un fusible (14) étant respectivement associé à chaque circuit oscillant et dans lequel les circuits oscillants (13) peuvent être amenés en résonance par des signaux à haute fréquence, des fusibles (14) sélectionnés fondant lors d'une excitation en résonance de leur circuit oscillant (13) associé respectif au-dessus d'une intensité donnée des signaux à haute fréquence.

10. Élément d'actionnement selon l'une des revendications 1 à 9, lequel est une vanne, une pompe de dosage ou un actionneur.

11. Procédé de mise à disposition et d'invocation de caractéristiques pour un élément d'actionnement électromagnétique qui comprend, pour être commandé, une borne électrique (6) et une unité de mémorisation (8 ; 8'), comprenant les étapes suivantes :
- génération de caractéristiques de l'élément d'actionnement au moyen d'un premier système externe (2),
- transmission de signaux électriques du premier système externe (2) à l'unité de mémorisation (8 ; 8') de l'élément d'actionnement (1) afin d'y enregistrer les caractéristiques,
- lecture des caractéristiques enregistrées dans l'unité de mémorisation (8 ; 8') par un deuxième système externe (3), de sorte que le deuxième système externe commande l'élément d'actionnement en se basant sur les caractéristiques,
la borne électrique (6) étant utilisée à la fois pour la transmission d'énergie électrique à l'élément d'actionnement en vue de sa commande et pour la transmission des signaux électriques en vue de l'enregistrement des caractéristiques dans l'unité de mémorisation (8 ; 8') et/ou en vue de la lecture des caractéristiques enregistrées dans l'unité de mémorisation par le deuxième système externe,
**caractérisé en ce**
**que** l'élément d'actionnement (1) est alimenté en énergie par un courant continu régulé auquel est superposé un courant alternatif à basse fréquence d'amplitude constante, et
**que** le deuxième système externe (3) est une électronique embarquée d'un véhicule qui commande l'élément d'actionnement (1) en se basant sur les caractéristiques enregistrées dans l'unité de mémorisation (8 ; 8').

12. Procédé selon la revendication 11, selon lequel l'unité de mémorisation (8 ; 8') est alimentée en énergie par le courant continu régulé ou par le courant alternatif à basse fréquence.

13. Procédé selon la revendication 12, selon lequel les caractéristiques sont enregistrées (S112, S113, S114, S115) dans l'unité de mémorisation et lues (S133) depuis celle-ci par un courant alternatif à haute fréquence superposé sur lequel est modulé un signal.

14. Procédé selon la revendication 13, selon lequel l'unité de mémorisation envoie (S135, S136) les caractéristiques au deuxième système externe (3) par un courant alternatif à haute fréquence sur lequel est modulé un signal et selon lequel les caractéristiques sont transmises par le courant alternatif à haute fréquence avec un décalage dans le temps en vue de commander l'unité de mémorisation.

15. Procédé selon l'une des revendications 11 à 14, selon lequel le premier système externe (2) est un banc d'essais ou équivalent.
